# FASCICULE DE BREVET EUROPEEN

(11) **EP 3 224 122 B1**
(45) Date de publication et mention de la délivrance du brevet: **26.06.2019**
(21) Numéro de dépôt: 15805589.7
(22) Date de dépôt: 18.11.2015
(51) Int. Cl.: B62D 35/00

(54) **BECQUET DE VEHICULE AUTOMOBILE AVEC FACE INFERIEURE AMOVIBLE**
KRAFTFAHRZEUGSPOILER MIT ABNEHMBARER UNTERSEITE
MOTOR VEHICLE SPOILER HAVING A REMOVABLE LOWER FACE

(30) Priorité: 28.11.2014 FR 1461645
(43) Date de publication de la demande: 04.10.2017
(73) Titulaire: Compagnie Plastic Omnium, 69007 Lyon (FR)
(72) Inventeur: KHAYAT, Issam, 69007 Lyon (FR)
(74) Mandataire: Andrieux, Benoît
(86) Numéro de dépôt international: PCT/FR2015/053109
(87) Numéro de publication internationale: WO 2016/083705

(56) Documents cités:
- WO-A1-2013/080003
- DE-A1-102012 102 442
- US-A1- 2010 026 045

## Description

La présente invention concerne le domaine de l'automobile.

Elle concerne plus particulièrement un becquet arrière, de véhicule automobile.

On appelle becquet (ou aileron, en anglais « spoiler ») une pièce de carrosserie destinée à améliorer l'aérodynamique du véhicule sur laquelle cette pièce est située. Les becquets sont également utilisés pour des aspects esthétiques du véhicule. Le becquet arrière est situé à l'arrière du véhicule. Il s'agit donc d'une pièce de carrosserie située entre le pavillon et la lunette.

Le becquet peut par exemple être situé sur la partie supérieure du hayon, à l'arrière du véhicule, juste au-dessus du bord supérieur de la lunette.

L'assemblage de la lunette sur le hayon (ou sur le pavillon) est effectué par une opération de collage qui réalise à la fois la fixation de la lunette et la fonction d'étanchéité. Afin de préserver l'intégrité du joint de colle, déposé généralement sous forme d'un cordon continu, il est nécessaire d'approcher et positionner la lunette et presser la colle par une trajectoire incidente quasi perpendiculaire à la piste de collage : cette contrainte d'assemblage impose donc que la trajectoire d'amenée de la lunette n'entre pas en interférence avec le becquet. Pour cela, il est nécessaire d'enlever le becquet avant de positionner la lunette. Cela est cependant indésirable car cela implique une opération de montage et démontage supplémentaire, et cela est même impossible lorsque le becquet est intégré avec le hayon (le terme « intégré avec » signifie que le becquet est moulé avec cette pièce durant sa fabrication) ou fixé sur le hayon (ou le pavillon ou la caisse) de façon inamovible.

Alternativement il est possible d'utiliser un becquet dont la longueur est suffisamment courte afin de permettre le positionnement de la lunette tel que décrit ci-dessus. Cependant cela présente l'inconvénient que les géométries possibles du becquet sont limitées. Un inconvénient supplémentaire de tels becquets est que le bord supérieur de la lunette reste visible, ce qui est préjudiciable en termes d'aspect et donc de qualité perçue par un utilisateur potentiel.

La présente invention vise à remédier à ces inconvénients.
Le document WO 2013/080003 A1 décrit un becquet arrière de véhicule automobile selon le préambule de la revendication 1.

L'invention vise à proposer un becquet qui permette l'assemblage de la lunette sur le hayon (ou le pavillon) mais dont la longueur et la géométrie ne soit pas limitées par cette opération d'assemblage.

Ce but est atteint grâce au fait que le becquet comporte
- Une première partie qui est destinée à être fixée en une position assemblée à l'arrière du véhicule, et qui forme la face supérieure du becquet,
- Une deuxième partie qui forme au moins une partie de la face inférieure du becquet et qui est apte à recouvrir le bord supérieur de la lunette arrière du véhicule lorsque cette deuxième partie est en position assemblée, cette deuxième partie étant amovible de façon à permettre l'assemblage ou le désassemblage d'une lunette arrière sur le véhicule.

Grâce à ces dispositions, la lunette arrière peut être assemblée sur l'arrière du véhicule dans la continuité du pavillon, soit sur le hayon soit sur le pavillon ou la caisse quelle que soit la géométrie et la longueur du becquet. Il suffit pour cela de retirer la deuxième partie amovible, et de la remettre ensuite une fois la lunette assemblée. De plus cette deuxième partie, lorsqu'elle est en position assemblée sur la première partie, recouvre le bord supérieur de la lunette (et le joint de colle de la lunette), ce qui améliore la qualité perçue par un utilisateur potentiel.

Selon l'invention, la première partie peut former le bord de fuite dudit becquet. Cette première partie peut être solidaire de façon permanente d'une partie arrière du véhicule.

Selon un mode de réalisation, la deuxième partie est apte à être fixée en position assemblée de façon amovible sur la première partie au moyen de premiers moyens de fixation.

Selon un mode de réalisation, la deuxième partie est apte à être fixée en position assemblée de façon amovible sur la partie arrière au moyen de deuxièmes moyens de fixation.

Selon un autre mode de réalisation, la deuxième partie porte un équipement technique.

L'invention concerne également un ensemble comprenant une partie arrière d'un véhicule, et un becquet selon l'invention qui est fixé sur cette partie arrière.

Par exemple, la partie arrière présente une extension supérieure qui s'étend dans l'espace entre la première partie et la deuxième partie. Ainsi, l'extrémité distale de l'extension supérieure peut être apte à être raccourcie ou allongée afin de diminuer ou d'augmenter la longueur dudit becquet. Par ailleurs, la première partie peut être apte à être fixée sur l'extension supérieure au moyen de premiers moyens de fixation.

Selon un autre exemple, la partie arrière présente une extension inférieure qui est située sous l'extension supérieure et sur laquelle est fixé le bord supérieur de la lunette. La deuxième partie peut alors être apte à être fixée sur l'extension inférieure au moyen de deuxièmes moyens de fixation.

Selon un exemple, cette partie arrière est un hayon qui comporte une doublure intégrée à ce hayon, cette doublure présentant cette extension supérieure et/ou cette extension inférieure.

Ainsi, on peut aisément choisir la longueur finale du becquet et configurer sa géométrie simplement en modifiant la longueur de l'extension supérieure de la doublure du hayon. On positionne ensuite sur la doublure du hayon une première partie du becquet dont la longueur est adaptée à celle du hayon, et une deuxième partie du becquet.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en coupe d'un becquet et d'un ensemble selon l'invention,
- la figure 2 est une vue en coupe d'une variante d'un becquet et d'un ensemble selon l'invention,
- la figure 3 est une vue en coupe d'un becquet et d'un ensemble selon une autre variante de l'invention.

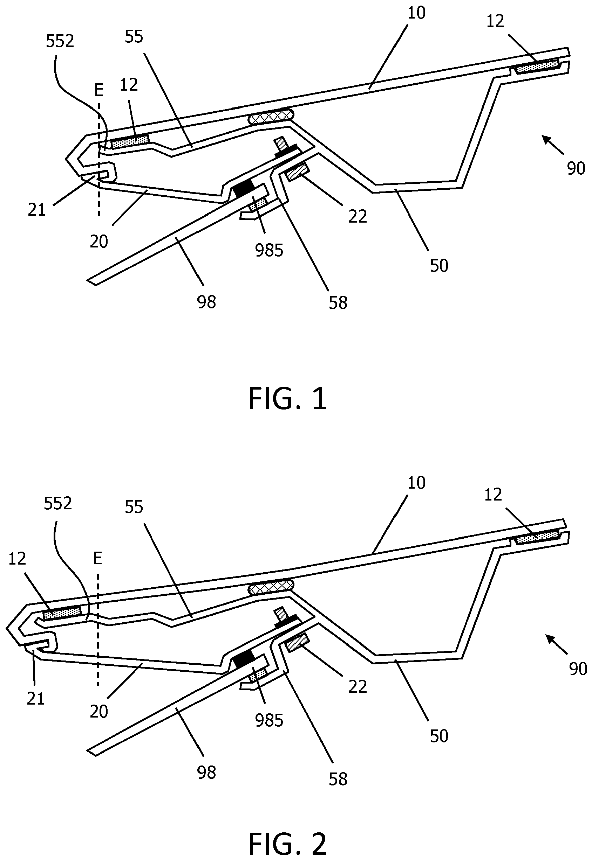

La figure 1 illustre un exemple particulier de réalisation d'un becquet 1 arrière selon l'invention.

L'invention est décrite ci-dessous dans le cas où la première partie 10 du becquet 1 est montée sur le hayon 90 du véhicule. L'invention s'applique cependant également au cas où le becquet 1 est monté sur un véhicule qui ne comporte pas de hayon 90, le becquet 1 étant alors monté sur le pavillon (toit) du véhicule, ou sur la caisse du véhicule. Par exemple le becquet 1 est monté sur une traverse arrière de pavillon.

Dans le cas le plus général, le becquet 1 est monté sur une partie arrière d'un véhicule.

Ainsi, dans la description ci-dessous, la partie arrière est un hayon qui comporte une doublure 50 intégrée à ce hayon, cette doublure 50 présentant une extension supérieure 55 et/ou une extension inférieure 58 (voir ci-dessous).

Le becquet 1 illustré sur la figure 1 est monté sur une doublure 50 de hayon 90 d'un véhicule automobile, plus précisément sur le montant supérieur du cadre formant l'ouverture destinée à recevoir la lunette 98.

La doublure 50 est intégrée au hayon 90, c'est-à-dire que la doublure 50 est moulée avec le hayon 90 durant sa fabrication.

Par convention, la doublure 50 (et ses extensions supérieure 55 et inférieure 58 - voir ci-dessous) ne font pas partie du becquet 1.

La coupe de la figure 1 est dans le plan longitudinal du véhicule (de l'avant vers l'arrière, l'avant étant situé à droite sur la figure, et l'arrière à gauche), la direction perpendiculaire au plan de coupe est donc la direction gauche-droite du véhicule (direction transversale).

Ce becquet 1 comprend une première partie 10, qui est fixée sur cette doublure 50 dans une position assemblée à l'aide de colle 12, comme représenté sur la figure 1. Alternativement, la première partie 10 est fixée sur la doublure 50 à l'aide de moyens d'assemblages mécaniques permanents tels que des rivetages, ou de moyens d'assemblage mécanique amovibles tels que des ensembles vis-écrou, ou de mélange de plusieurs de ces moyens.

Alternativement, au moins une portion de la première partie 10 est intégrée au hayon 90. La totalité de la première partie 10 peut ainsi être intégrée au hayon 90.

Ainsi, par exemple, selon l'invention, la première partie 10 est solidaire de façon permanente du hayon 90, ou plus généralement d'une partie arrière du véhicule.

La première partie 10 forme la face supérieure du becquet 1.

Par exemple, comme représenté sur la figure 1, la première partie 10 forme également le bord de fuite du becquet 1.

Le becquet 1 comprend également une deuxième partie 20 qui forme au moins une partie de la face inférieure du becquet 1. Par exemple, comme représenté sur la figure 1, la deuxième partie 20 forme la totalité de la face inférieure du becquet 1.

Le hayon 90 porte une lunette (arrière) 98 qui est notamment fixée par son bord supérieur 985 sur ce hayon 90 par un joint de colle (visible sur la figure 1).

La deuxième partie 20 est amovible de façon à permettre l'assemblage ou le désassemblage de cette lunette arrière 98 sur le véhicule. Ainsi, une fois la lunette arrière 98 fixée sur le hayon 90, on vient fixer la deuxième partie 20 sur la première partie 10 et/ou sur le hayon 90, la deuxième partie 20 étant alors dans une position assemblée.

Dans cette position assemblée, la deuxième partie 20 recouvre le bord supérieur 985 de la lunette 98 de telle sorte que ce bord (et en particulier le cordon de collage ou joint d'étanchéité avec la doublure 50 de hayon 90) n'est pas visible pour une personne se tenant à l'arrière et à l'extérieur du véhicule et regardant la lunette et le becquet.

D'une manière générale, la deuxième partie (20) est apte à être fixée en position assemblée de façon amovible sur la première partie (10) au moyen de premiers moyens de fixation (21). Alternativement, ou en supplément, la deuxième partie (20) est apte à être fixée en position assemblée de façon amovible sur le hayon (90) (ou plus généralement sur la partie arrière du véhicule) au moyen de deuxièmes moyens de fixation (22).

Par exemple, la deuxième partie 20 est fixée de façon amovible sur la première partie 10 au moyen de premiers moyens de fixation 21, et sur le hayon 90 au moyen de deuxièmes moyens de fixation 22.

La figure 1 illustre le cas où la deuxième partie 20 est fixée à la fois sur la première partie 10 et sur la doublure 50 du hayon 90.

Les premiers moyens de fixation 21 sont l'ensemble constitué d'une part par une rainure formée par l'extrémité recourbée de la première partie 10 s'étendant sur tout ou partie de la largeur transversale de la première partie 10, et d'autre part par un crochet à une extrémité de la deuxième partie 20 s'étendant sur tout ou partie de la largeur transversale de la deuxième partie 20, cette rainure et ce crochet coopérant pour réaliser la fixation de la première partie 10 sur la deuxième partie 20.

Alternativement, les premiers moyens de fixation 21 sont par exemple des encliquetages, des ensembles languettes/trous.

Comme illustré en figure 1, la doublure 50 présente une extension supérieure 55, et une extension inférieure 58 située sous l'extension supérieure 55 et sur laquelle est fixé le bord supérieur 985 de la lunette 98. Dans le cas d'espèce, la doublure 50 se subdivise de l'avant vers l'arrière (direction du véhicule) en l'extension supérieure 55 et l'extension inférieure 58.

Avantageusement, l'extension supérieure 55 s'étend dans l'espace entre la première partie 10 et la deuxième partie 20.

D'autres géométries de l'extension supérieure 55 sont possibles.

La première partie 10 est apte à être fixée sur l'extension supérieure 55 au moyen des premiers moyens de fixation 21 et la deuxième partie 20 est apte à être fixée sur l'extension inférieure 58 au moyen des deuxièmes moyens de fixation 22.

La figure 1 représente la première partie 10 en position assemblée sur l'extension supérieure 55 (par exemple à l'aide de colle) et la deuxième partie 20 en position assemblée sur l'extension inférieure 58 au moyen des deuxièmes moyens de fixation 22.

Les deuxièmes moyens de fixation 22 sont des ensembles vis-écrou (boulon) répartis sur la largeur transversale de la doublure 50 du hayon 90 et qui fixent la deuxième partie 20 sur la doublure 50.

Ainsi, la deuxième partie 20, étant fixée à une extrémité sur la première partie 10 et à son autre extrémité sur le hayon 90, est maintenue fermement en place.

Alternativement, les deuxièmes moyens de fixation 22 sont par exemple des encliquetages, des ensembles languettes/trous.

La deuxième partie 20 étant amovible, on peut toujours retirer la lunette 98 après avoir retiré la deuxième partie 20, et la remplacer par une autre lunette si cela est nécessaire sans avoir besoin de toucher à la première partie 10, qui n'est pas nécessairement amovible. Après le remplacement de la lunette 98, il suffit de fixer à nouveau la deuxième partie 20 sur la première partie 10.

En position assemblée, le bord supérieur 985 de la lunette 98 est ainsi pris en sandwich entre une extrémité de la doublure 50 sur laquelle est collé ce bord supérieur 985, et une portion de la deuxième partie 20, comme représenté sur la figure 1.

Avantageusement, un joint élastique est intercalé entre le bord supérieur 985 et cette portion de la deuxième partie 20, afin de rattraper des jeux et d'assurer une étanchéité.

La figure 2 illustre une variante de l'invention dans laquelle l'extension supérieure 55 de la doublure 50 s'étend davantage vers l'arrière que l'extension supérieure 55 dans le cas qui est illustré sur la figure 1.

La ligne verticale en pointillés désignée « E » sur la figure 1 marque l'extrémité arrière de l'extension supérieure 55 (extrémité distale 552). Sur la figure 2, la ligne « E » est positionnée de façon identique par rapport aux éléments de forme et de position identiques entre les deux figures (par exemple la lunette 98). On note que l'extension supérieure 55 présente une extrémité distale 552 qui s'étend vers l'arrière au-delà de la ligne « E ». Par voie de conséquence, la première partie 10 et la deuxième partie 20 du becquet 1 s'étendent également davantage vers l'arrière que dans le cas qui est illustré sur la figure 1. Dans les deux cas, la première partie 10 repose (et est par exemple collée) sur l'extrémité distale 552, ce qui confère une plus grande rigidité au becquet 1.

Ceci permet d'avoir un becquet 1 allongé davantage vers l'arrière, ce qui peut notamment améliorer l'aérodynamisme du véhicule.

Inversement, l'extrémité distale 552 de l'extension supérieure 55 peut être raccourcie afin de diminuer la longueur du becquet 1, ce qui revient à passer de la variante représentée sur la figure 2 à la variante représentée sur la figure 1.

Ainsi, l'extrémité distale 552 de l'extension supérieure 55 est apte à être raccourcie ou allongée afin de diminuer ou d'augmenter la longueur du becquet 1.

Ceci présente l'avantage de permettre une modification facile des propriétés du becquet 1 et de son apparence externe.

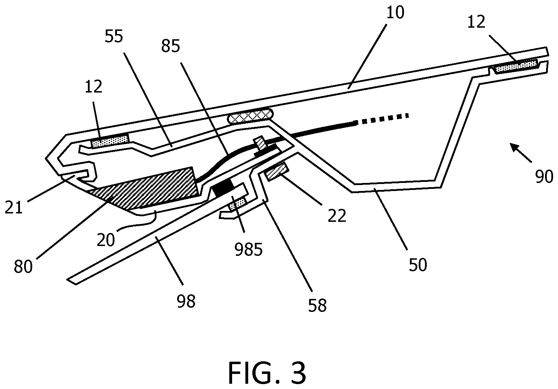

La figure 3 illustre une variante de l'invention dans laquelle la deuxième partie 20 porte un équipement technique 80.

On entend par élément technique un élément apportant une fonctionnalité au véhicule autre que celle du becquet. Cet élément technique est par exemple tout ou partie d'un feu de signalisation arrière, d'un élément décoratif (jonc chromé, emblème ...) ou lumineux (liseré rétro éclairé ...), d'une antenne, d'un lave-vitre (élément composé du gicleur et du tuyau), d'un essuie-vitre, d'une caméra, d'un capteur, d'un radar. L'élément technique 80 débouche sur l'extérieur du véhicule par un trou spécialement aménagé dans la deuxième partie 20.

Avantageusement, ce trou peut être aménagé pour recevoir un parmi plusieurs éléments techniques 80 distincts, de telle sorte que les éléments techniques 80 sont interchangeables sans qu'il soit nécessaire de changer la deuxième partie 20.

Le cas échéant, cet élément technique est connecté à une alimentation électrique ou en eau du véhicule par une connexion 85, qui si nécessaire traverse la doublure 50 par un trou spécialement aménagé pour réaliser cette connexion.

Ainsi, l'élément technique 80 est ainsi mieux visible d'un autre véhicule suivant le véhicule, ce qui est spécialement avantageux s'il s'agit d'un feu de signalisation ou d'un élément décoratif et/ou lumineux.

Avantageusement, la deuxième partie 20 peut également porter simultanément une pluralité d'éléments techniques 80, par exemple un feu arrière et un essuie-vitre.

## Revendications

1. Becquet (1) arrière de véhicule automobile, ledit becquet (1) comportant :
- Une première partie (10) qui est destinée à être fixée en une position assemblée à l'arrière dudit véhicule et qui forme la face supérieure dudit becquet (1),
- Une deuxième partie (20) qui forme au moins une partie de la face inférieure dudit becquet (1) et qui est apte à recouvrir un bord supérieur (985) d'une lunette (98) arrière dudit véhicule lorsque cette deuxième partie (20) est en position assemblée, ledit becquet étant **caractérisé en ce que** ladite deuxième partie (20) est amovible de façon à permettre l'assemblage ou le désassemblage d'une lunette (98) arrière sur ledit véhicule.

2. Becquet (1) selon la revendication 1, **caractérisé en ce que** ladite première partie (10) forme le bord de fuite dudit becquet (1).

3. Becquet (1) selon la revendication 1 ou 2, **caractérisé en ce que** ladite première partie (10) est solidaire de façon permanente d'une partie arrière dudit véhicule.

4. Becquet (1) selon l'une quelconque des revendications 1 à 3, **caractérisé en ce que** ladite deuxième partie (20) est apte à être fixée en position assemblée de façon amovible sur ladite première partie (10) au moyen de premiers moyens de fixation (21).

5. Becquet (1) selon l'une quelconque des revendications 1 à 4, **caractérisé en ce que** ladite deuxième partie (20) est apte à être fixée en position assemblée de façon amovible sur ladite partie arrière au moyen de deuxièmes moyens de fixation (22).

6. Becquet (1) selon l'une quelconque des revendications 1 à 3, **caractérisé en ce que** ladite deuxième partie (20) porte un équipement technique (80).

7. Ensemble **caractérisé en ce qu'**il comprend une partie arrière d'un véhicule, et un becquet (1) selon l'une quelconque des revendications précédentes qui est fixé sur ladite partie arrière.

8. Ensemble selon la revendication 7 **caractérisé en ce que** ladite partie arrière du véhicule présente une extension supérieure (55) qui s'étend dans l'espace entre ladite première partie (10) et ladite deuxième partie (20).

9. Ensemble selon la revendication 8 **caractérisé en ce que** l'extrémité distale (552) de ladite extension supérieure (55) est apte à être raccourcie ou allongée afin de diminuer ou d'augmenter la longueur dudit becquet (1).

10. Ensemble selon la revendication 8 ou 9 **caractérisé en ce que** ladite première partie (10) est apte à être fixée sur ladite extension supérieure (55) au moyen de premiers moyens de fixation (21).

11. Ensemble selon l'une quelconque des revendications 8 à 10 **caractérisé en ce que** ladite partie arrière présente une extension inférieure (58) qui est située sous ladite extension supérieure (55) et sur laquelle est fixé ledit bord supérieur (985) de la lunette (98).

12. Ensemble selon la revendication 11, **caractérisé en ce que** ladite deuxième partie (20) est apte à être fixée sur ladite extension inférieure (58) au moyen de deuxièmes moyens de fixation (22).

13. Ensemble selon l'une quelconque des revendications 8 à 12 **caractérisé en ce que** la partie arrière est un hayon qui comporte une doublure (50) intégrée à ce hayon, cette doublure 50 présentant ladite ou lesdites extensions (55, 58).

## Patentansprüche

1. Heck-Spoiler (1) für Kraftfahrzeug, wobei der Spoiler (1) Folgendes aufweist:
- einen ersten Teil (10), der dazu bestimmt ist, in einer an dem Heck des Fahrzeugs montierten Position befestigt zu werden, und der die obere Seite des Spoilers (1) bildet,
- einen zweiten Teil (20), der wenigstens einen Teil der unteren Seite des Spoilers (1) bildet und der in der Lage ist, eine obere Kante (985) einer Heckscheibe (98) des Fahrzeugs zu bedecken, wenn dieser zweite Teil (20) in der montierten Position ist, wobei der Spoiler **dadurch gekennzeichnet ist, dass** der zweite Teil (20) abnehmbar ist, um die Montage oder die Demontage eines Heckfensters (98) an dem Fahrzeug zu gestatten.

2. Spoiler (1) nach Anspruch 1, **dadurch gekennzeichnet, dass** der erste Teil (10) die Hinterkante des Spoilers (1) bildet.

3. Spoiler (1) nach Anspruch 1 oder 2, **dadurch gekennzeichnet, dass** der erste Teil (10) mit einem Heckteil des Fahrzeugs dauerhaft fest verbunden ist.

4. Spoiler (1) nach einem der Ansprüche 1 bis 3, **dadurch gekennzeichnet, dass** der zweite Teil (20) in der montierten Position an dem ersten Teil (10) mittels erster Befestigungsmittel (21) abnehmbar befestigbar ist.

5. Spoiler (1) nach einem der Ansprüche 1 bis 4, **dadurch gekennzeichnet, dass** der zweite Teil (20) in der montierten Position an dem Heckteil mittels zweiter Befestigungsmittel (22) abnehmbar befestigbar ist.

6. Spoiler (1) nach einem der Ansprüche 1 bis 3, **dadurch gekennzeichnet, dass** der zweite Teil (20) eine technische Einrichtung (80) trägt.

7. Anordnung **dadurch gekennzeichnet, dass** sie einen Heckteil eines Fahrzeugs und einen Spoiler (1) nach einem der vorhergehenden Ansprüche umfasst, der an dem Heckteil befestigt ist.

8. Anordnung nach Anspruch 7, **dadurch gekennzeichnet, dass** der Heckteil des Fahrzeugs eine obere Verbreiterung (55) aufweist, die sich in dem Raum zwischen dem ersten Teil (10) und dem zweiten Teil (20) erstreckt.

9. Anordnung nach Anspruch 8, **dadurch gekennzeichnet, dass** das distale Ende (552) der oberen Verbreiterung (55) verkürzbar oder verlängerbar ist, um die Länge des Spoilers (1) zu verkleinern oder zu vergrößern.

10. Anordnung nach Anspruch 8 oder 9, **dadurch gekennzeichnet, dass** der erste Teil (10) an der oberen Verbreiterung (55) mittels erster Befestigungsmittel (21) befestigbar ist.

11. Anordnung nach einem der Ansprüche 8 bis 10, **dadurch gekennzeichnet, dass** der Heckteil eine untere Verbreiterung (58) aufweist, die unter der oberen Verbreiterung (55) gelegen ist und an der die obere Kante (985) der Scheibe (98) befestigt ist.

12. Anordnung nach Anspruch 11, **dadurch gekennzeichnet, dass** der zweite Teil (20) an der unteren Verbreiterung (58) mittels zweiter Befestigungsmittel (22) befestigbar ist.

13. Anordnung nach einem der Ansprüche 8 bis 12, **dadurch gekennzeichnet, dass** der Heckteil eine Heckklappe ist, die eine in diese Heckklappe integrierte Auskleidung (50) aufweist, wobei diese Auskleidung (50) die Verbreiterung(en) (55, 58) aufweist.

## Claims

1. Motor vehicle spoiler (1), said spoiler (1) comprising:
- A first part (10) which is intended to be fastened in a position assembled on the rear of said vehicle, and which forms the upper face of said spoiler (1),
- A second part (20) which forms at least one part of the lower face of said spoiler (1) and which is adapted to cover an upper edge (985) of a rear window (98) of said vehicle when this second part (20) is in the assembled position, said spoiler being **characterised in that** said second part (20) is removable so as to allow a rear window (98) to be assembled on or disassembled from said vehicle.

2. Spoiler (1) according to claim 1, **characterised in that** said first part (10) forms the trailing edge of said spoiler (1).

3. Spoiler (1) according to claim 1 or 2, **characterised in that** said first part (10) is fastened permanently to a rear part of said vehicle.

4. Spoiler (1) according to any one of claims 1 to 3, **characterised in that** said second part (20) is adapted to be removably fastened in the assembled position to said first part (10) using first fastening means (21).

5. Spoiler (1) according to any one of claims 1 to 4, **characterised in that** said second part (20) is adapted to be removably fastened in the assembled position to said rear part (10) using second fastening means (22).

6. Spoiler (1) according to any one of claims 1 to 3, **characterised in that** said second part (20) carries technical equipment (80).

7. Assembly **characterised in that** it comprises a rear part of a vehicle, and a spoiler (1) according to any one of the preceding claims which is fastened to said rear part.

8. Assembly according to claim 7, **characterised in that** said rear part of the vehicle has an upper extension (55) which extends into the space between said first part (10) and said second part (20).

9. Assembly according to claim 8, **characterised in that** the distal end (552) of said upper extension (55) is adapted to be shortened or lengthened in order to decrease or increase the length of said spoiler (1).

10. Assembly according to claim 8 or 9, **characterised in that** said first part (10) is adapted to be fastened to said upper extension (55) using first fastening means (21).

11. Assembly according to any one of claims 8 to 10, **characterised in that** said rear part has a lower extension (58) which is located under said upper extension (55) and to which said upper edge (985) of the rear window (98) is fastened.

12. Assembly according to claim 11, **characterised in that** said second part (20) is adapted to be fastened to said lower extension (58) using second fastening means (22).

13. Assembly according to any one of claims 8 to 12, **characterised in that** the rear part is a tailgate which comprises a lining (50) integrated with this tailgate, this lining 50 having said extension(s) (55, 58).
